# EUROPÄISCHE PATENTSCHRIFT

(11) **EP 3 763 961 B1**
(45) Veröffentlichungstag und Bekanntmachung des Hinweises auf die Patenterteilung: **31.08.2022**
(21) Anmeldenummer: 20185073.2
(22) Anmeldetag: 09.07.2020
(51) Int. Cl.: F16D 23/04

(54) **SYNCHRONISIERUNGSEINHEIT FÜR EIN SCHALTGETRIEBE**
SYNCHRONIZING UNIT FOR A GEARBOX
UNITÉ DE SYNCHRONISATION POUR UNE BOÎTE DE VITESSES

(30) Priorität: 12.07.2019 DE 102019119016
(43) Veröffentlichungstag der Anmeldung: 13.01.2021
(73) Patentinhaber: HOERBIGER Antriebstechnik Holding GmbH, 86956 Schongau (DE)
(72) Erfinder: Völk, Wolfgang, 86956 Schongau (DE); Dempfle, Andreas, 86956 Schongau (DE); Binder, Jürgen, 86956 Schongau (DE); Fürguth, Werner, 86956 Schongau (DE); Fischer, Patrick, 86956 Schongau (DE)
(74) Vertreter: Prinz & Partner mbB

(56) Entgegenhaltungen:
- EP-A1- 0 743 466
- EP-A2- 2 003 356
- EP-A2- 3 312 446
- DE-A1-102013 105 622
- JP-A- 2011 098 679

## Beschreibung

Das Gebiet der Erfindung betrifft Synchronisierungseinheiten für Schaltgetriebe die gemäß dem Oberbegriff des Anspruchs 1 ausgebildet sind.

Solche Synchronisierungseinheiten sind aus dem Stand der Technik bekannt.

Beispielsweise zeigen die EP 0 743 466 A1 und die JP 2011 098679 A Synchronisierungseinheiten mit den Merkmalen des Oberbegriffs des Anspruchs 1.

Dabei dienen die Druckstücke einer sogenannten Vorsynchronisierung, die zu Beginn eines Schaltvorgangs stattfindet. Das zumindest eine Druckstück bewirkt aufgrund einer Verschiebung einer Schiebemuffe, dass der Reibkonus des Synchronrings mit einem korrespondierenden Reibkonus an einem Kupplungskörper in Reibkontakt gelangt. Dabei wird der Synchronring üblicherweise in seine Sperrstellung verdreht.

Synchronisierungseinheiten der eingangs genannten Art unterliegen einem ständigen Kostendruck, sodass allgemein angestrebt wird, diese einfach und kostengünstig aufzubauen.

Die Vereinfachung des Aufbaus von Synchronisierungseinheiten findet jedoch dahingehend eine Grenze, dass Schwingungen innerhalb der Synchronisierungseinheiten vermieden werden sollen. Dies ist insbesondere bei sehr hohen Drehzahlen von Bedeutung. Bauteilschwingungen innerhalb der Synchronisierungseinheiten führen einerseits zu einer unerwünschten Geräuschentwicklung und andererseits zu unerwünschten Beschädigungen von Bauteilen der Synchronisierungseinheit. Ferner bewirken sie unerwünschte Schleppmomente.

Ein weiteres Ziel bei der Entwicklung von Synchronisierungseinheiten ist üblicherweise ein geringer Bauraumbedarf, also ein kompakter Aufbau der Synchronisierungseinheit.

Vor diesem Hintergrund ist es die Aufgabe der Erfindung, eine verbesserte Synchronisierungseinheit anzugeben. Diese soll insbesondere einfach und kostengünstig aufgebaut sein, unerwünschte Schwingungen vermeiden und einen geringen Bauraumbedarf aufweisen.

Die Aufgabe wird durch eine Synchronisierungseinheit gemäß Anspruch 1 gelöst. Die Ringfedern sind in diesem Zusammenhang einerseits mit dem jeweils zugeordneten Synchronring und andererseits mit dem Druckstück gekoppelt. Dadurch dienen die Ringfedern der Zentrierung der Synchronringe innerhalb der Synchronisierungseinheit, insbesondere relativ zu einer Schiebemuffe der Synchronisierungseinheit. Auf diese Weise werden unerwünschte Bewegungen der Synchronringe, Geräusche und insbesondere Schwingungen unterbunden. Gleichzeitig stellen die Ringfedern vergleichsweise einfache und kostengünstige Bauteile dar, sodass die Synchronisierungseinheit einfach und kostengünstig aufgebaut ist. In diesem Zusammenhang können sowohl am Umfang geschlossene Ringfedern verwendet werden als auch Ringfedern mit einem Umfangsschlitz, also nicht vollständig am Umfang geschlossene Ringfedern.

Erfindungsgemäß hat das Druckstück in Einbaulage in Axialrichtung betrachtet einen U-förmigen Querschnitt mit einer nach radial innen weisenden offenen Seite. Das bedeutet, dass ein Mittelsteg des U-förmigen Querschnitts in Einbaulage des Druckstücks radial außen angeordnet ist und die zugeordneten Seitenschenkel radial nach innen weisen. Die Seitenschenkel stehen dabei bevorzugt im Wesentlichen senkrecht vom Mittelsteg ab. Ein derartiges Druckstück ist leicht im Gewicht und einfach herstellbar.

Die im Anspruch 1 genannten Komponenten stellen den Kern der erfindungsgemäßen Synchronisierungseinheit dar. Selbstverständlich kann eine derartige Synchronisierungseinheit auch eine Nabe umfassen, die drehfest und axialfest mit einer Getriebewelle koppelbar ist. Zudem kann eine Schiebemuffe vorgesehen sein, die drehfest, aber axial verschiebbar mit der Nabe gekoppelt ist und dem wahlweise drehfesten Koppeln der Nabe mit einem Kupplungskörper dient. Bei den erfindungsgemäßen Synchronisierungseinheiten ist in diesem Zusammenhang der erste Synchronring einem ersten Kupplungskörper zugeordnet und der zweite Synchronring einen zweiten Kupplungskörper. Die Synchronisierungseinheit dient in bekannter Weise dazu, eine Drehzahl der Nabe und des mit dieser zu koppelnden Kupplungskörpers anzugleichen, bevor mittels der Schiebemuffe eine drehfeste Verbindung dieser Elemente erzeugt wird.

Die Sperrverzahnungsabschnitte der Synchronringe können entweder am Umfang vollständig umlaufen oder umfangsmäßig segmentiert sein. Letzteres ist bevorzugt. Dann sind nur dort Segmente der Sperrverzahnungsabschnitte vorgesehen, wo die zugehörige Funktion benötigt wird. Derart gestaltete Synchronringe sind leicht im Gewicht.

An jedem Synchronring kann zumindest ein Kopplungselement zur Drehkopplung des jeweiligen Synchronrings mit einer Nabe vorgesehen sein, wobei mittels des Kopplungselements die am zugeordneten Synchronring positionierte Ringfeder gehalten ist. Die Kopplungselemente dienen in üblicher Weise einer Indexierung. Zusätzlich wird mittels der Kopplungselemente die dem jeweiligen Synchronring zugeordnete Ringfeder am Synchronring gehalten. Dies kann formschlüssig oder reibschlüssig erfolgen. Eine Bewegung der Ringfeder relativ zum zugeordneten Synchronring wird somit unterbunden oder zumindest erschwert. Auf diese Weise findet eine zuverlässige Kopplung der Synchronringe mit den jeweils zugeordneten Ringfedern statt, sodass eine wirkungsvolle Zentrierung der Synchronringe erreicht wird. Dies wirkt sich positiv auf das Schwingungsverhalten der Synchronisierungseinheiten aus. Mit anderen Worten werden unerwünschte Schwingungen und Geräusche unterbunden. Zudem können die Synchronringe über die jeweils zugeordneten Ringfedern und das Druckstück in einem unbetätigten Zustand der Synchronisierungseinheit zuverlässig in der sogenannten Lüftungsstellung, d.h. in einer nicht geschalteten Stellung, gehalten werden.

Bevorzugt sind mehrere Druckstücke, insbesondere drei Druckstücke, und mehrere Kopplungselemente vorgesehen, wobei die Druckstücke und die Kopplungselemente umfangsmäßig alternierend angeordnet sind. Es sind also bevorzugt an jedem Synchronring auch drei Kopplungselemente vorgesehen, die gleichmäßig am Umfang verteilt sind, also mit einem Winkelabstand von jeweils 120° positioniert sind. Auf diese Weise ergibt sich ein kompakter Aufbau der Synchronisierungseinheit. Ferner kann durch die Mehrzahl an Druckstücken und die Mehrzahl an Kopplungselementen eine verbesserte Zentrierung der Synchronringe erreicht werden, sodass sich ein besonders vorteilhaftes Schwingungsverhalten der Synchronisierungseinheit ergibt. Das bedeutet, dass unerwünschte Schwingungen reduziert oder eliminiert werden. Zudem treten so im Lüftungszustand nur sehr geringe Schleppmomente auf.

Gemäß einer Ausführungsform verlaufen die Kopplungselemente in Umfangsrichtung betrachtet L-förmig, mit einem vom Reibkonusabschnitt radial nach außen verlaufenden Steg und einem daran anschließenden, sich axial und radial nach innen erstreckenden Schenkel. Jeder Schenkel weist also eine Axialkomponente und eine Radialkomponente auf. Dabei ist bevorzugt die Axialkomponente deutlich größer als die Radialkomponente. Die Kopplungselemente verlaufen somit axial schräg, wobei die Kopplungselemente radial nach innen geneigt sind. Es ergibt sich so eine besonders zuverlässige Kopplung der Synchronringe mit den jeweils zugeordneten Ringfedern.

Vorteilhafterweise ist dabei ein Neigungswinkel des Schenkels der Kopplungselemente gegenüber der Synchronringachse größer als ein Neigungswinkel des Reibkonusabschnitts gegenüber der Synchronringachse. Alternativ ist ein Neigungswinkel des Schenkels der Kopplungselemente gegenüber der Synchronringachse kleiner als ein Neigungswinkel des Reibkonusabschnitts gegenüber der Synchronringachse. Auch kann ein Neigungswinkel des Schenkels der Kopplungselemente gegenüber der Synchronringachse im Wesentlichen gleich groß sein wie ein Neigungswinkel des Reibkonusabschnitts gegenüber der Synchronringachse. Der durch die Kopplungselemente definierte Raum, innerhalb dem die jeweils zugeordnete Ringfeder mit dem Synchronring gekoppelt ist, ist aufgrund der Gestaltung der Kopplungselemente lediglich axial nach innen offen. Die Ringfedern können also von axial innen in diesem Raum eingeführt werden. Durch den Neigungswinkel des Schenkels des Kopplungselements wird ein unerwünschtes Herausrutschen der Ringfeder aus diesem Raum verhindert, wobei gleichzeitig eine gute Montierbarkeit der Ringfedern gewährleistet bleibt. Das liegt daran, dass ein Radialabstand zwischen dem Reibkonusabschnitt und dem offenen Ende des Kopplungselementes vergleichsweise gering ist. Dadurch sind die Ringfedern sicher am Synchronring gehalten.

In einer Variante liegen die Ringfedern radial innenseitig an ihrem zumindest einen zugeordneten Kopplungselement an, insbesondere liegen sie in Neutralstellung am Übergang zwischen Schenkel und Steg an. Wenn die Schenkel der Kopplungselemente zudem radial nach innen geneigt sind, liegt radial innerhalb der Kopplungselemente am Übergang zwischen dem Schenkel und dem Steg ein größerer, durch die Ringfeder einnehmbarer Durchmesser vor als am offenen Ende des Schenkels. Damit die Ringfeder also den Bereich radial innerhalb der Kopplungselemente verlassen kann, muss sie nach radial innen verformt werden. Die Feder wird somit im unverformten Zustand formschlüssig radial innerhalb der zugeordneten Kopplungselemente gehalten.

In einer alternativen Ausführungsform steht das zumindest eine Kopplungselement im Wesentlichen radial oder axial vom zugeordneten Synchronring ab. Im Falle des im Wesentlichen radialen Abstehens kann die jeweils zugehörige Ringfeder über einen axial wirkenden Formschluss am Synchronring gehalten sein. Im Falle des im Wesentlichen axialen Abstehens kann die jeweils zugehörige Ringfeder reib- oder kraftschlüssig am Synchronring gehalten sein. Sie liegt also reib- oder kraftschlüssig am Kopplungselement an. In allen Varianten ergibt sich eine zuverlässige Kopplung des Synchronrings mit der zugeordneten Ringfeder. Daraus resultiert ein günstiges Schwingungsverhalten, das auch zu geringen Schleppmomenten in der Lüftungsstellung sowie einer geringen Geräuschentwicklung führt.

Die Ringfedern können radial nach außen vorgespannt sein und liegen somit unter Ausübung einer radial nach außen gerichteten Kraft radial innenseitig an den zugeordneten Kopplungselementen an. Eine derartige Vorspannung bewirkt auch, dass die Druckstücke radial nach außen federbelastet sind. Die Druckstücke werden so an einen Innenumfang der Schiebemuffe gedrückt. Auf diese Weise ergeben sich eine besonders wirkungsvolle Zentrierung der Synchronringe und zudem eine besonders gute Schwingungsdämpfung.

Für den Fall, dass die Kopplungselemente einen sich axial und radial nach innen erstreckenden Schenkel aufweisen, liegen die Ringfedern bevorzugt unter Vorspannung radial innen an den Kopplungselementen an.

Alternativ oder zusätzlich weist das Druckstück in Einbaulage an seiner radialen Innenseite zumindest zwei axial voneinander beabstandete Umfangsnuten auf und in jeder der Umfangsnuten ist eine der Ringfedern aufgenommen. Auf diese Weise sind die Ringfedern zuverlässig und präzise an den Druckstücken gehalten. Insbesondere stellt eine derartige Kopplung eine formschlüssige Verbindung zwischen Druckstück und Ringfeder in Axialrichtung dar. Dabei muss die Umfangsnut am Druckstück nicht durchgängig sein, sondern kann auch aus mehreren Nutabschnitten zusammengesetzt sein. Über den Nutgrund der Umfangsnuten kann eine radial orientierte Kraft von den Ringfedern ins Druckstück eingebracht werden.

Bevorzugt weist das Druckstück in Einbaulage an seiner radialen Außenseite einen Zentriervorsprung auf, der in Neutralstellung der Synchronisierungseinheit in eine zugeordnete, an einer Schiebemuffe vorgesehene Zentriervertiefung eingreifen kann und/oder in zumindest einer Schaltstellung der Synchronisierungseinheit in eine zugeordnete, an der Schiebemuffe vorgesehene Haltegeometrie eingreifen kann. Durch den Zentriervorsprung kann das Druckstück in der Neutralstellung und/oder zumindest einer Schaltstellung in einer definierten Position an der Schiebemuffe gehalten werden. Insbesondere weist eine Synchronisierungseinheit, die zwei Schaltstellungen einnehmen kann, für beide Schaltstellungen jeweils eine Haltegeometrie auf. Somit werden unerwünschte Bewegungen des Druckstücks relativ zur Schiebemuffe vermieden. Das gilt auch für unerwünschte Schwingungen und Geräusche. Darüber hinaus bewirkt die Zentrierung des Druckstücks, dass in der Neutralstellung der Synchronisierungseinheit die Synchronringe und die Ringfedern eine vorgegebene Position einnehmen. Dadurch werden unerwünschte Schleppmomente innerhalb der Synchronisierungseinheit vermieden oder zumindest reduziert.

In einer bevorzugten Ausführungsform ist das Druckstück ein Stanzbiegeteil aus Blech, ein Schmiedeteil, ein generativ gefertigtes Bauteil oder ein Kunststoffbauteil. Solche Bauteile lassen sich einfach und kostengünstig herstellen. Dies gilt insbesondere für hohe Stückzahlen. Ferner lassen sich vorgegebene Toleranzen leicht einhalten.

Für den Fall, dass das Druckstück ein generativ gefertigtes Bauteil ist, kann es pulvermetallurgisch oder mittels eines 3D-Druck-Verfahrens hergestellt sein. Es können also sowohl metallische Werkstoffe als auch Kunststoffe zum generativen Fertigen des Druckstücks verwendet werden.

Falls das Druckstück aus einem Metallwerkstoff hergestellt ist, umfasst es insbesondere einen Stahlwerkstoff oder einen Messingwerkstoff.

Dabei können die Umfangsnuten an radial nach innen weisenden Stirnflächen der Seitenschenkel des U vorgesehen sein. Jede Umfangsnut ist also aus zwei Nutabschnitten zusammengesetzt, wobei ein erster Nutabschnitt in einer Stirnfläche eines ersten Seitenschenkels vorgesehen ist und ein zweiter Nutabschnitt in einer Stirnfläche eines zweiten Seitenschenkels. Es ergibt sich so eine zuverlässige Kopplung der Ringfedern mit dem Druckstück, wobei gleichzeitig das Druckstück einfach und leicht aufgebaut ist.

Der Zentriervorsprung kann in Einbaulage des Druckstücks betrachtet ein nach außen umgeformter Abschnitt des Mittelstegs des U sein. Wenn das Druckstück aus Blech hergestellt ist, ist der Zentriervorsprung ein nach außen gebogener Blechabschnitt. Solche Blechabschnitte können auch als Ausprägungen bezeichnet werden. Die Herstellung des Zentriervorsprungs ist somit einfach. Auf zusätzliche Bauteile kann verzichtet werden.

Zudem ist es möglich, dass sich das Druckstück in einer Neutralstellung der Synchronisierungseinheit in jeweils eine Aussparung im Sperrverzahnungsabschnitt des ersten Synchronrings und des zweiten Synchronrings erstreckt oder axiale Stirnseiten des Druckstücks in einer Neutralstellung der Synchronisierungseinheit dem Sperrverzahnungsabschnitt des jeweils benachbarten Synchronrings gegenüberliegen, insbesondere am Sperrverzahnungsabschnitt des jeweils benachbarten Synchronrings anliegen. Eine solche Aussparung kann auch als Umfangsfenster bezeichnet werden. Es kann in Radialrichtung offen oder geschlossen ausgeführt sein. Vorzugsweise ist die Aussparung zwischen zwei benachbarten Verzahnungssegmenten angeordnet. Es ergibt sich ein kompakter Aufbau der Synchronisierungseinheit. Bei der Variante ohne Aussparung ergibt sich ebenfalls ein kompakter Aufbau. Zudem ist der Synchronring besonders einfach und mechanisch stabil aufgebaut.

Im Betrieb einer erfindungsgemäßen Synchronisierungseinheit können im Wesentlichen drei Zustände unterschieden werden.

In einem Neutralbetrieb der Synchronisierungseinheit greifen die Zentriervorsprünge aller Druckstücke in jeweils zugeordnete Zentriervertiefungen an der Schiebemuffe ein oder es liegen die axialen Stirnseiten der Druckstücke dem Sperrverzahnungsabschnitt des jeweils benachbarten Synchronrings gegenüber. Dabei sind alle Druckstücke mittels der in den Umfangsnuten liegenden Ringfedern radial nach außen vorgespannt. Die Druckstücke sind also gegen einen Innenumfang der Schiebemuffe federbelastet. Dadurch werden die Synchronringe zentriert, sodass von diesen verursachte Schleppmomente eliminiert oder zumindest klein gehalten werden.

In einem Auslenkungsbetrieb der Synchronisierungseinheit sind die Druckstücke über die Kopplung mit der Schiebemuffe, die mittels der Zentriervertiefungen und dem Zentriervorsprung erfolgt, in eine im Wesentlichen axial orientierte Auslenkungsrichtung verlagert. Dabei wird in der Variante, in der sich die Druckstücke in Aussparungen der Synchronringe erstreckten, die in Auslenkungsrichtung vorne liegende Ringfeder axial innenseitig an den Sperrverzahnungsabschnitt des in Auslenkungsrichtung vorne liegenden Synchronrings angelegt. Dadurch wird ein Reibkonusabschnitt des Synchronrings in Reibkontakt mit einem zugeordneten Reibkonusabschnitt eines zugeordneten Kupplungskörpers gebracht. In der Variante ohne Aussparungen drücken die in Auslenkungsrichtung vorne liegenden Stirnseiten der Druckstücke gegen den benachbarten Sperrverzahnungsabschnitt. Die in Auslenkungsrichtung hinten liegende Ringfeder wird mittels der Umfangsnuten der Druckstücke in Auslenkungsrichtung mitgenommen und ist dabei durch die Kopplungselemente am in Auslenkungsrichtung hinteren Synchronring gehalten.

Die Auslenkungsstellung entspricht dabei der Vorsynchronisierungsstellung.

In einem Rückführbetrieb ist die Schiebemuffe nicht mehr aktiv ausgelenkt. Die Druckstücke werden daher mittels der beiden Ringfedern in die Neutralstellung zurückgeführt, wobei die in Auslenkungsrichtung hintere Ringfeder, in Kooperation mit den Koppelelementen die hierfür notwendige Kraft bereitstellen kann.

Die Erfindung wird nachstehend anhand mehrerer Ausführungsbeispiele erläutert, die in den beigefügten Zeichnungen gezeigt sind. Es zeigen:
- Figur 1 eine erfindungsgemäße Synchronisierungseinheit gemäß einer ersten Ausführungsform in einer Halbschnittdarstellung, wobei die Schnittebene im Bereich eines Druckstücks angeordnet ist,
- Figur 2 die Synchronisierungseinheit aus Figur 1 in einer anderen Halbschnittdarstellung, wobei die Schnittebene außerhalb eines Druckstücks verläuft,
- Figur 3 eine Unterbaugruppe der Synchronisierungseinheit aus den Figuren 1 und 2 in einer perspektivischen Darstellung,
- Figur 4 einen Schnitt der Unterbaugruppe aus Figur 3 in einer Schnittebene IV
- Figur 5 einen Schnitt der Unterbaugruppe aus Figur 3 in einer Schnittebene V,
- Figur 6 eine erfindungsgemäße Synchronisierungseinheit gemäß einer zweiten Ausführungsform in einer Explosionsdarstellung,
- Figur 7 die Synchronisierungseinheit aus Figur 6 in einer Schnittdarstellung,
- Figur 8 die Synchronisierungseinheit aus den Figuren 6 und 7 in einer weiteren Schnittdarstellung,
- Figur 9 eine erfindungsgemäße Synchronisierungseinheit gemäß einer dritten Ausführungsform in einer Halbschnittdarstellung,
- Figur 10 eine erfindungsgemäße Synchronisierungseinheit gemäß einer vierten Ausführungsform in einer Schnittdarstellung,
- Figur 11 einen Bereich XI der Synchronisierungseinheit aus Figur 10 in einer vergrößerten Darstellung,
- Figur 12 eine Unterbaugruppe der Synchronisierungseinheit aus den Figuren 10 und 11 in einer perspektivischen Darstellung,
- Figur 13 einen Synchronring der Synchronisierungseinheit aus den Figuren 10 und 11 in einer isolierten Darstellung,
- Figur 14 eine erfindungsgemäße Synchronisierungseinheit gemäß einer fünften Ausführungsform in einer Schnittdarstellung,
- Figur 15 einen Bereich XV der Synchronisierungseinheit aus Figur 14 in einer vergrößerten Darstellung,
- Figur 16 eine Unterbaugruppe der Synchronisierungseinheit aus den Figuren 14 und 15 in einer perspektivischen Darstellung,
- Figur 17 einen Synchronring der Synchronisierungseinheit aus den Figuren 14 und 15 in einer isolierten Darstellung,
- Figur 18 eine erfindungsgemäße Synchronisierungseinheit gemäß einer sechsten Ausführungsform in einer Schnittdarstellung,
- Figur 19 einen Bereich XIX der Synchronisierungseinheit aus Figur 18 in einer vergrößerten Darstellung,
- Figur 20 eine Unterbaugruppe der Synchronisierungseinheit aus den Figuren 18 und 19 in einer perspektivischen Darstellung,
- Figur 21 einen Synchronring der Synchronisierungseinheit aus den Figuren 18 und 19 in einer isolierten Darstellung,
- Figur 22 eine erfindungsgemäße Synchronisierungseinheit gemäß einer siebten Ausführungsform in einer Schnittdarstellung,
- Figur 23 einen Bereich XXIII der Synchronisierungseinheit aus Figur 22 in einer vergrößerten Darstellung,
- Figur 24 eine Unterbaugruppe der Synchronisierungseinheit aus den Figuren 22 und 23 in einer perspektivischen Darstellung,
- Figur 25 einen Synchronring der Synchronisierungseinheit aus den Figuren 22 und 23 in einer isolierten Darstellung, und
- Figur 26 ein Druckstück der Synchronisierungseinheit aus den Figuren 22 und 23 in einer isolierten Darstellung.

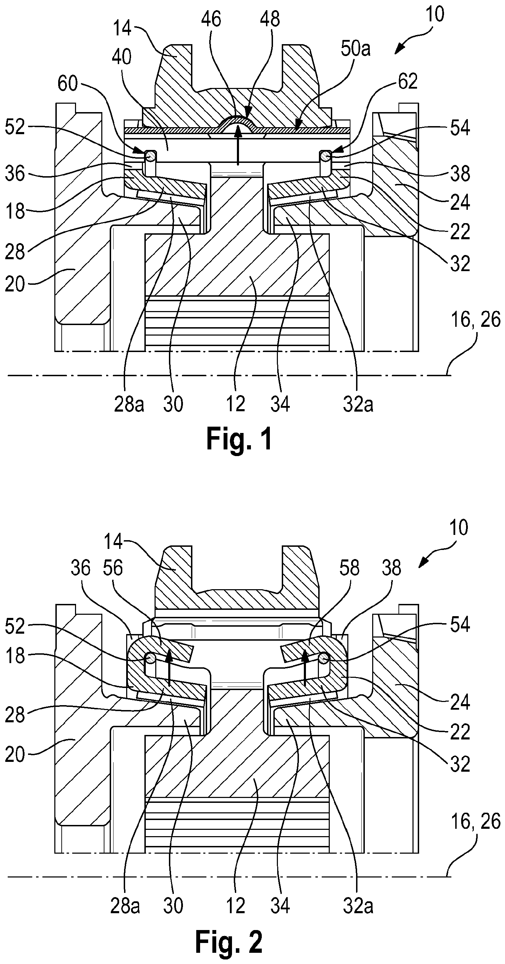

Figur 1 zeigt eine Synchronisierungseinheit 10 für ein Schaltgetriebe eines Kraftfahrzeugs.

Diese umfasst eine Nabe 12, die mit einer nicht näher dargestellten Getriebewelle drehfest und axialfest koppelbar ist. Mit der Nabe 12 ist in bekannter Weise eine Schiebemuffe 14 drehfest, aber entlang einer Mittelachse 16 der Synchronisierungseinheit 10 verschiebbar verbunden.

Darüber hinaus umfasst die Synchronisierungseinheit 10 einen ersten Synchronring 18, mittels dem eine Drehzahl der Nabe 12 mit einer Drehzahl eines ersten Kupplungskörpers 20 synchronisierbar ist.

Ferner ist ein zweiter Synchronring 22 vorgesehen, mittels dem eine Drehzahl der Nabe 12 mit einer Drehzahl eines zweiten Kupplungskörpers 24 synchronisierbar ist.

Der erste Synchronring 18 und der zweite Synchronring 22 sind koaxial angeordnet und um eine Synchronringachse 26, die der Mittelachse 16 entspricht, drehbar angeordnet.

Dabei weist der erste Synchronring 18 einen Reibkonusabschnitt 28 mit einer radial innenseitigen Reibfläche 28a (siehe Figur 2) auf, die mit einem Reibkonusabschnitt 30 des ersten Kupplungskörpers 20 im Sinne der Drehzahlsynchronisierung zusammenwirken kann.

Der zweite Synchronring 22 hat auch einen Reibkonusabschnitt 32 mit einer radial innenseitigen Reibfläche 32a. Diese kann mit einem Reibkonusabschnitt 34 des zweiten Kupplungskörpers 24 im Sinne der Drehzahlsynchronisierung zusammenwirken.

Darüber hinaus weist der erste Synchronring 18 einen ersten Sperrverzahnungsabschnitt 36 auf und der zweite Synchronring 22 einen zweiten Sperrverzahnungsabschnitt 38.

Die beiden Synchronringe 18, 22 sind dabei derart relativ zueinander angeordnet, dass die Sperrverzahnungsabschnitte 36, 38 an entgegengesetzten axialen Enden derselben angeordnet sind.

In der dargestellten Ausführungsform weist die Synchronisierungseinheit 10 zudem drei Druckstücke 40 auf, die der Vorsynchronisierung dienen.

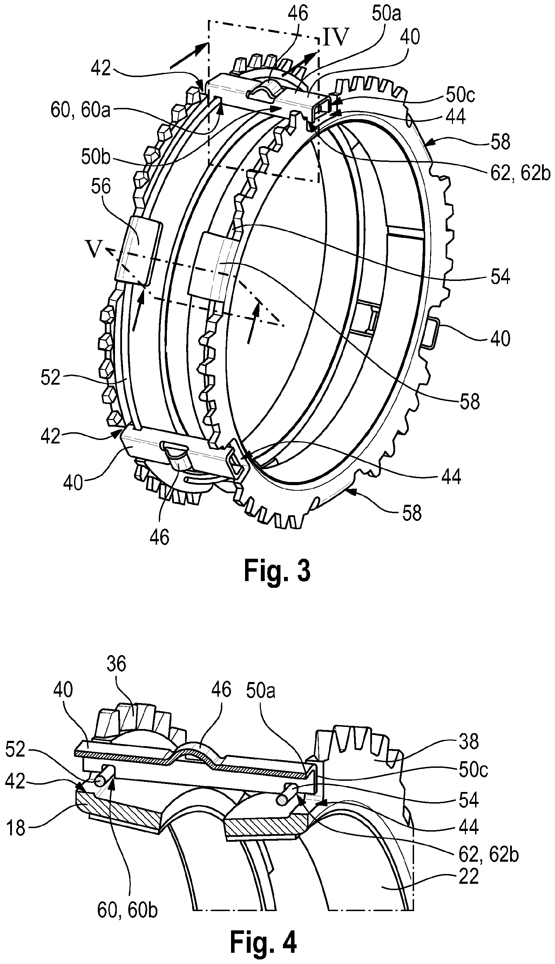

Dabei erstreckt sich (siehe Figur 3) jedes der Druckstücke 40 in einer Neutralstellung der Synchronisierungseinheit 10, also in deren ungeschaltetem Zustand, jeweils in eine Aussparung 42, die im ersten Sperrverzahnungsabschnitt 36 des ersten Synchronrings 18 angeordnet ist und in eine Aussparung 44, die im zweiten Sperrverzahnungsabschnitt 38 des zweiten Synchronrings 22 vorgesehen ist.

Jedes der Druckstücke 40 weist zusätzlich einen Zentriervorsprung 46 (siehe Figur 3) auf, der in der Neutralstellung der Synchronisierungseinheit 10 in eine zugeordnete, an der Schiebemuffe 14 vorgesehene Zentriervertiefung 48 (siehe Figur 1) eingreift.

In der dargestellten Ausführungsform sind die Druckstücke 40 als Stanzbiegeteile aus Blech ausgeführt.

Dabei weisen sie einen U-förmigen Querschnitt auf, wenn sie in Einbaulage in Axialrichtung betrachtet werden. Der U-förmige Querschnitt umfasst einen Mittelsteg 50a (siehe Figuren 3 und 4), der radial außen angeordnet ist, sowie zwei Seitenschenkel 50b, 50c, die ausgehend vom Mittelsteg 50a radial nach innen weisen.

Mit anderen Worten hat der U-förmige Querschnitt eine nach radial innen weisende offene Seite.

Der Zentriervorsprung 46 ist dabei als ein nach außen umgeformter Abschnitt des Mittelstegs 50a ausgebildet. Konkret handelt es sich dabei um eine nach außen gebogene Blechlasche.

Die Synchronisierungseinheit 10 umfasst auch zwei Ringfedern.

Dabei ist eine erste Ringfeder 52 an einer radialen Außenseite des Reibkonusabschnitts 28 des ersten Synchronrings 18 angeordnet. Eine zweite Ringfeder 54 ist an einer radialen Außenseite des Reibkonusabschnitts 32 des zweiten Synchronrings 22 positioniert.

Die erste Ringfeder 52 ist zudem mittels dreier Kopplungselemente 56, die in der dargestellten Ausführungsform als Kopplungslaschen ausgeführt sind, am ersten Synchronring 18 gehalten.

Dabei übergreifen die Kopplungselemente 56 die Ringfeder 52 radial außenseitig.

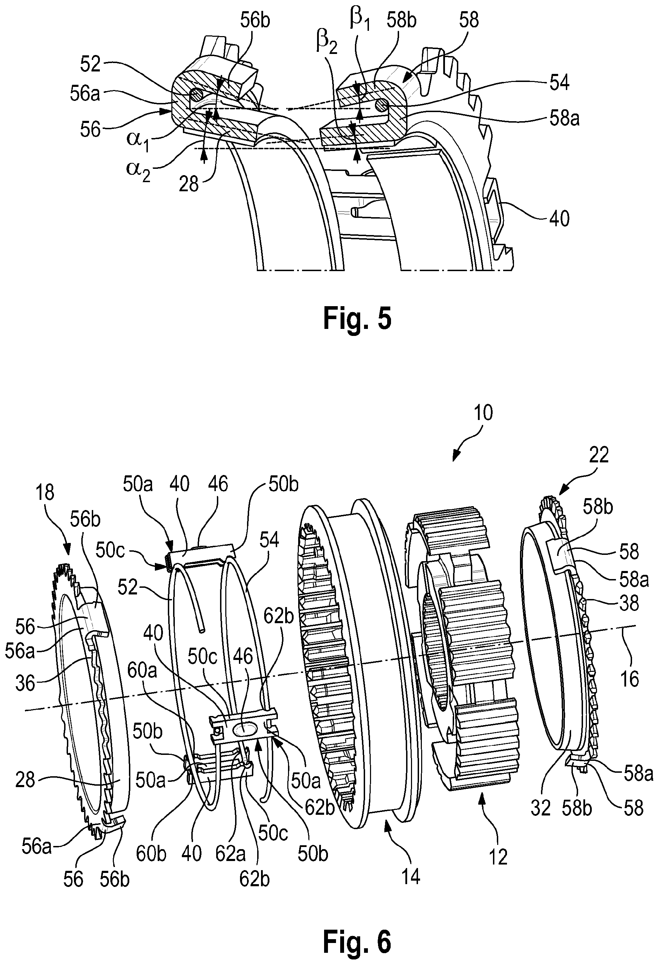

Hierfür weisen sie einen L-förmigen Verlauf auf, wenn sie in Umfangsrichtung betrachtet werden. Vom Reibkonusabschnitt 28 geht dabei ein radial nach außen verlaufender Steg 56a (siehe Figur 5) aus, an den sich ein axial und radial nach innen erstreckender Schenkel 56b anschließt.

Der Schenkel 56b des Kopplungselements 56 ist dabei gegenüber der Synchronringachse 26 mit einem Neigungswinkel α₁ geneigt, der größer ist als ein Neigungswinkel α₂ des Reibkonusabschnitts 28 gegenüber der Synchronringachse 26.

Selbstverständlich kann der Neigungswinkel α₁ auch kleiner sein als der Neigungswinkel α₂.

Ebenfalls ist es denkbar, dass die Neigungswinkel α₁, α₂ im Wesentlichen gleich groß sind.

Die Ringfeder 52 ist in diesem Zusammenhang radial nach außen vorgespannt und liegt somit unter Vorspannung radial innen am Kopplungselement 56 an.

Aufgrund der Schrägstellung des Schenkels 56b liegt die Ringfeder 52 dabei am Übergang zwischen dem Steg 56a und dem Schenkel 56b am Kopplungselement 56 an.

Die zweite Ringfeder 54 ist in analoger Weise mit dem zweiten Synchronring 22 gekoppelt.

In diesem Zusammenhang ist sie mittels dreier Kopplungselemente 58, die als Kopplungslaschen ausgeführt sind, am zweiten Synchronring 22 gehalten.

Dabei übergreifen die Kopplungselemente 58 die Ringfeder 54 radial außenseitig, wofür die Kopplungselemente 58 einen L-förmigen Verlauf aufweisen, wenn sie in Umfangsrichtung betrachtet werden.

Sie umfassen dabei einen vom Reibkonusabschnitt 32 ausgehenden, radial nach außen verlaufender Steg 58a und einen sich dran anschließenden, sich axial und radial nach innen erstreckenden Schenkel 58b.

Dabei ist der Schenkel 58b der Kopplungselemente 58 gegenüber der Synchronringachse 26 mit einem Neigungswinkel β₁ geneigt, der größer ist als ein Neigungswinkel β₂ des Reibkonusabschnitts 32 gegenüber der Synchronringachse 26.

Selbstverständlich kann der Neigungswinkel β₁ auch kleiner sein als der Neigungswinkel β_{2.}

Ebenfalls ist es denkbar, dass die Neigungswinkel β₁, β₂ im Wesentlichen gleich groß sind.

Der Neigungswinkel β₁ und der Neigungswinkel α₁ sind dabei im Wesentlichen gleich groß. Gleiches gilt für die Neigungswinkel β₂ und α₂.

Auch die Ringfeder 54 ist radial nach außen vorgespannt und liegt somit unter Vorspannung radial innen am Kopplungselement 58 an.

Aufgrund der Schrägstellung des Schenkels 58b liegt sie dabei am Übergang zwischen dem Steg 58a und dem Schenkel 58b an.

An beiden Synchronringen 18, 22 sind die Kopplungselemente 56, 58 alternierend zu den Druckstücken 40, genauer gesagt alternierend zu den den Druckstücken 40 zugeordneten Aussparungen 42, 44 angeordnet.

Des Weiteren dienen die Kopplungselemente 56, 58 in bekannter Weise der Drehkopplung des jeweiligen Synchronrings 18, 22 mit der Schiebemuffe 14. Diese Drehkopplung wird auch als Indexierung bezeichnet.

Die Ringfedern 52, 54 sind auch mit den Druckstücken 40 gekoppelt.

Die erste Ringfeder 52 ist in einer ersten Umfangsnut 60 (siehe Figuren 3 und 4) jedes Druckstücks 40 aufgenommen, wobei die Umfangsnut 60 in Einbaulage an einer radialen Innenseite des Druckstücks 40 vorgesehen ist.

Nachdem das Druckstück 40 einen U-förmigen Querschnitt hat, ist die Umfangsnut 60 an den radial nach innen weisenden Stirnflächen der Seitenschenkel 50b, 50c vorgesehen. Mit anderen Worten ist die Umfangsnut 60 durch einen in der Stirnfläche des Seitenschenkels 50b verlaufenden Umfangsnutabschnitt 60a und einen in der Stirnfläche des Seitenschenkel 50c verlaufenden Umfangsnutabschnitt 60b gebildet.

Die zweite Ringfeder 54 ist in einer zweiten Umfangsnut 62 aufgenommen. Auch die zweite Umfangsnut 62 ist in Einbaulage an einer radialen Innenseite des Druckstücks 40 vorgesehen.

Die zweite Umfangsnut 62 ist in Axialrichtung von der ersten Umfangsnut 60 beabstandet.

Aufgrund des U-förmigen Querschnitts des Druckstücks 40 ist die Umfangsnut 62 an den radial nach innen weisenden Stirnflächen der Seitenschenkel 50c, 50c vorgesehen. Genauer gesagt, ist die Umfangsnut 62 durch einen in der Stirnfläche des Seitenschenkels 50b verlaufenden Umfangsnutabschnitt 62a und einen in der Stirnfläche des Seitenschenkel 50c verlaufenden Umfangsnutabschnitt 62b gebildet.

Nachdem jedes Druckstück 40 in den Umfangsnuten 60, 62 beide Ringfedern 52, 54 aufnimmt, sind die Ringfedern 52, 54 in Axialrichtung mittels der Druckstücke 40 gekoppelt.

Ein Betrieb der Synchronisierungseinheit 10 wird ausgehend von den Figuren 1 bis 3 erläutert. Dort ist die Synchronisierungseinheit 10 in einer Neutralstellung gezeigt.

Soll nun ein dem Kupplungskörper 20 zugeordneter Gang geschaltet werden, so wird die Schiebemuffe 14 in den Figuren 1 und 2 nach links verschoben.

Dabei nimmt sie im Zuge der Vorsynchronisierung die Druckstücke 40 mit.

Nachdem die Ringfeder 52 mit den Druckstücken 40 in Axialrichtung gekoppelt ist, wird diese gegen den Sperrverzahnungsabschnitt 36 beaufschlagt und bewirkt somit, dass die Reibfläche 28a durch die Verschiebung der Schiebemuffe 14 in Reibkontakt mit dem Reibkonusabschnitt 30 des Kupplungskörpers 20 gelangt und somit zu einer Synchronisierung der Drehzahlen der Nabe 12 und des Kupplungskörpers 20 führt.

Die in Betätigungsrichtung hinten liegende, zweite Ringfeder 54 wird ebenfalls durch die Verschiebung der Druckstücke 40 in Axialrichtung mitgenommen.

Dabei muss sie an der radialen Innenseite der Kopplungselemente 58, genauer gesagt an der radialen Innenseite der Schenkel 58b entlanggleiten.

Dies kann nur unter einer Verformung der Ringfeder 54 nach radial innen geschehen. Sie bewegt sich also entlang der Schenkel 58b sowohl in Axialrichtung als auch in Radialrichtung nach innen.

Dadurch wird eine gewisse Rückstellkraft erzeugt, die jedoch erst dann ihre Wirkung entfalten kann, wenn die Schiebemuffe 14 nicht mehr aktiv betätigt wird oder in ihre Neutralstellung zurückgeschoben wird.

Aufgrund der Rückstellkraft strebt die Ringfeder 54 dann wieder in ihre Lage am Übergang zwischen dem Steg 58a und dem Schenkel 58b.

Bei dieser Bewegung nimmt sie die Druckstücke 40 und die Ringfeder 52 mit, sodass alle diese Bauteile wieder in ihre Neutralstellung zurückgestellt werden. Somit liegt wieder die Neutralstellung der Synchronisierungseinheit 10 vor.

Selbstverständlich kann mittels der Synchronisierungseinheit 10 auch ein dem Kupplungskörper 24 zugeordneter Gang geschaltet werden. Dies erfolgt in analoger Weise, sodass auf die vorstehenden Ausführungen verwiesen wird.

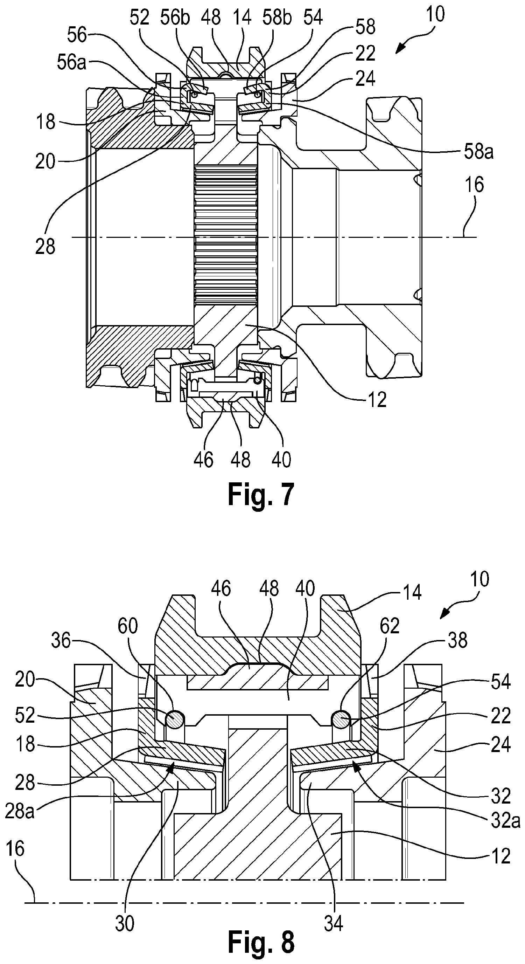

In den Figuren 6 bis 8 ist eine zweite Ausführungsform der Synchronisierungseinheit 10 dargestellt. Dabei wird lediglich auf die Unterschiede zur vorstehend erläuterten Ausführungsform eingegangen.

Sie unterscheidet sich dadurch, dass in den Sperrverzahnungsabschnitten 36, 38 der Synchronringe 18, 22 keine Aussparungen vorgesehen sind.

In der Neutralstellung der Synchronisierungseinheit 10 liegen somit axiale Stirnseiten der Druckstücke 40 am jeweils benachbarten Sperrverzahnungsabschnitt 36, 38 an. In Richtung des ersten Synchronrings 18 weisende axiale Stirnseiten der Druckstücke 40 liegen am Sperrverzahnungsabschnitt 36 an und die in Richtung des zweiten Synchronrings 22 weisenden axialen Stirnseiten der Druckstücke 40 kontaktieren den Sperrverzahnungsabschnitt 38.

Beim Schalten des dem Kupplungskörper 20 zugeordneter Gangs werden also die Druckstücke 40 direkt gegen den Sperrverzahnungsabschnitt 36 beaufschlagt und bewirken somit die Vorsynchronisierung. Analoges gilt, wenn ein dem Kupplungskörper 24 zugeordneter Gang geschaltet werden soll.

Im Übrigen wird auf die Erläuterungen zum ersten Ausführungsbeispiel verwiesen.

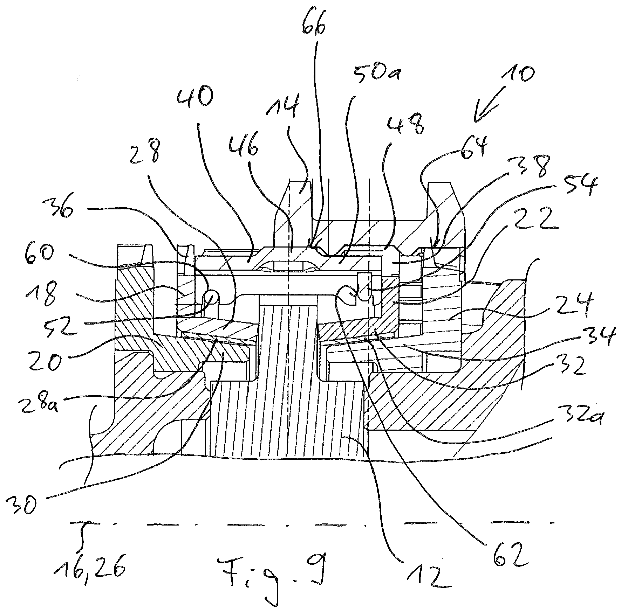

Eine dritte Ausführungsform der Synchronisierungseinheit 10 ist in Figur 9 gezeigt. Dabei wird wieder nur auf die Unterschiede zu den vorhergehenden Ausführungsformen eingegangen.

Diese betreffen die Schiebemuffe 14, die nunmehr in Axialrichtung benachbart zur Zentriervertiefung 48 zwei Haltegeometrien 64, 66 aufweist, die so ausgebildet sind, dass in jeweils zugeordneten Schaltstellungen der Zentriervorsprung 46 in sie eingreifen kann.

Dabei greift in einer dem ersten Synchronring 18 zugeordneten Schaltstellung, die in der Figur 9 einer nicht näher dargestellten Verlagerung der Schiebemuffe 14 nach links entspricht, der Zentriervorsprung 46 in die Haltegeometrie 64 ein.

In einer dem zweiten Synchronring 22 zugeordneten Schaltstellung, die der in der Figur 9 nach rechts verlagerten Position der Schiebemuffe 14 entspricht, greift der Zentriervorsprung in die Haltegeometrie 66 ein.

Beide Haltegeometrien 64, 66 sind als umfangsmäßig umlaufende, einseitig axial offene Nuten ausgeführt.

Somit lassen sich auch in den Schaltstellungen der Synchronisierungseinheit 10 die Synchronringe 18, 22 zentrieren und in einer Lüftungsstellung halten, sodass sich geringe Schleppmomente ergeben.

Es versteht sich, dass die Schiebemuffe gemäß der dritten Ausführungsform sowohl in der Synchronisierungseinheit 10 gemäß der ersten Ausführungsform als auch in der Synchronisierungseinheit 10 gemäß der zweiten Ausführungsform verwendet werden kann.

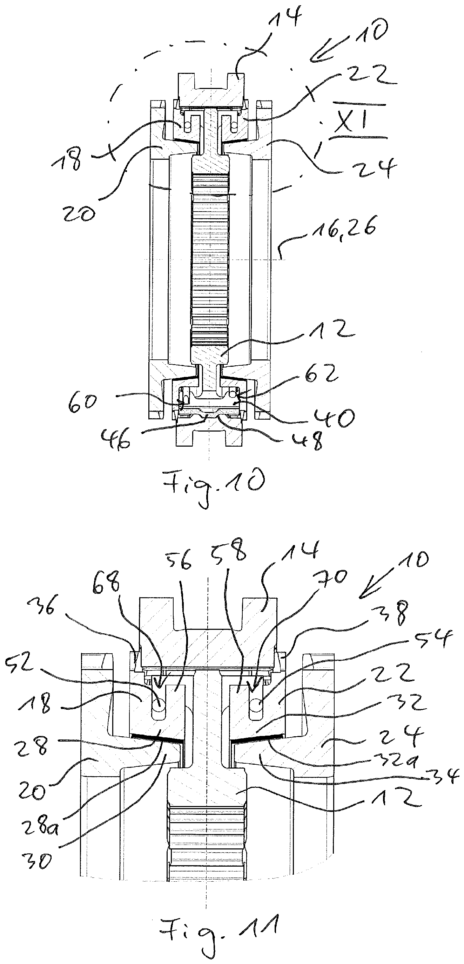

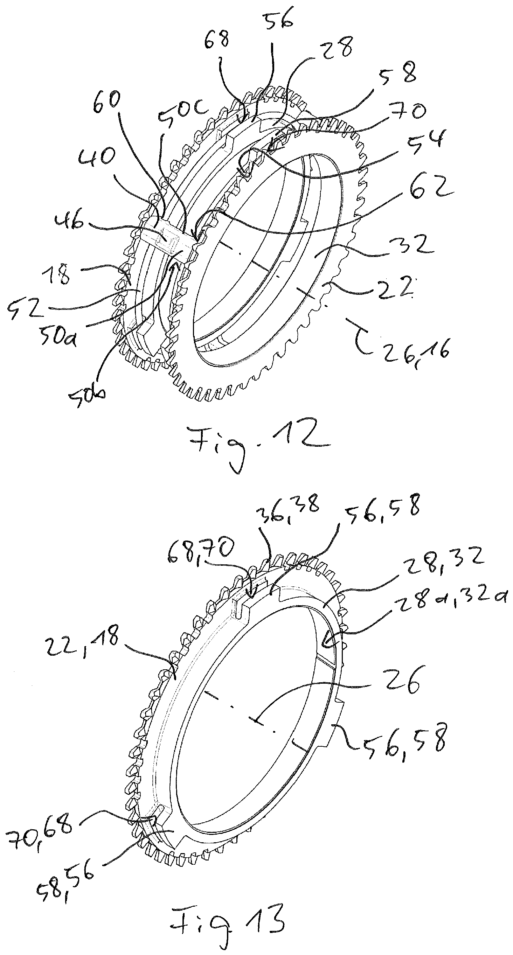

In den Figuren 10 bis 13 ist eine vierte Ausführungsform der Synchronisierungseinheit 10 dargestellt. Wieder wird lediglich auf die Unterschiede zu den zuvor beschriebenen Ausführungsformen eingegangen.

Diese betreffen die Kopplungselemente 56, 58, die nun im Wesentlichen radial vom Reibkonusabschnitt 28, 32 des jeweils zugeordneten Synchronrings 18, 22 abstehen.

Dabei sind die Kopplungselemente 56, 58 jeweils an einem dem Sperrverzahnungsabschnitt 36, 38 entgegengesetzten axialen Ende des zugeordneten Synchronrings 18, 22 positioniert.

Somit ergibt sich zwischen jedem der Kopplungselemente 56, 58 und dem zugeordneten Sperrverzahnungsabschnitt 36, 38 ein umfangsmäßig umlaufender Nutabschnitt 68, 70.

In den Nutabschnitten 68, 70 ist die jeweils zugehörige Ringfeder 52, 54 aufgenommen, sodass diese über einen in Axialrichtung wirkenden Formschluss am jeweiligen Synchronring 18, 22 gehalten ist.

Die Betätigung der Synchronisierungseinheit 10 gemäß der vierten Ausführungsform ergibt sich dabei analog zur ersten und zweiten Ausführungsform, wobei sich jedoch beim Verlagern der Schiebemuffe 14 die in Verlagerungsrichtung axial hinten liegende der Ringfedern 52, 54 in Axialrichtung verformt. Genauer gesagt werden die zwischen den Kopplungselementen 56, 58 liegenden Abschnitte der jeweiligen Ringfeder 52, 54 axial vom zugehörigen Sperrverzahnungsabschnitt 36, 38 weggebogen. Daraus resultiert eine entsprechende Rückstellkraft in Richtung der Neutralstellung der Synchronisierungseinheit 10.

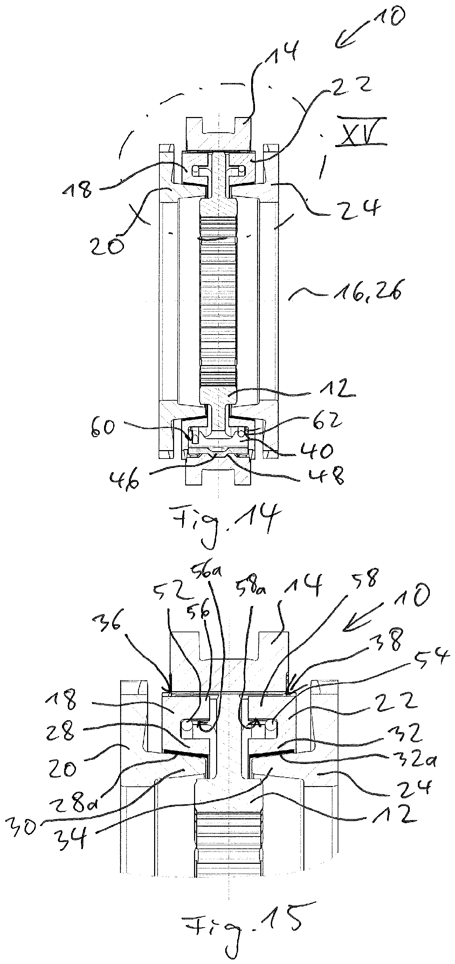

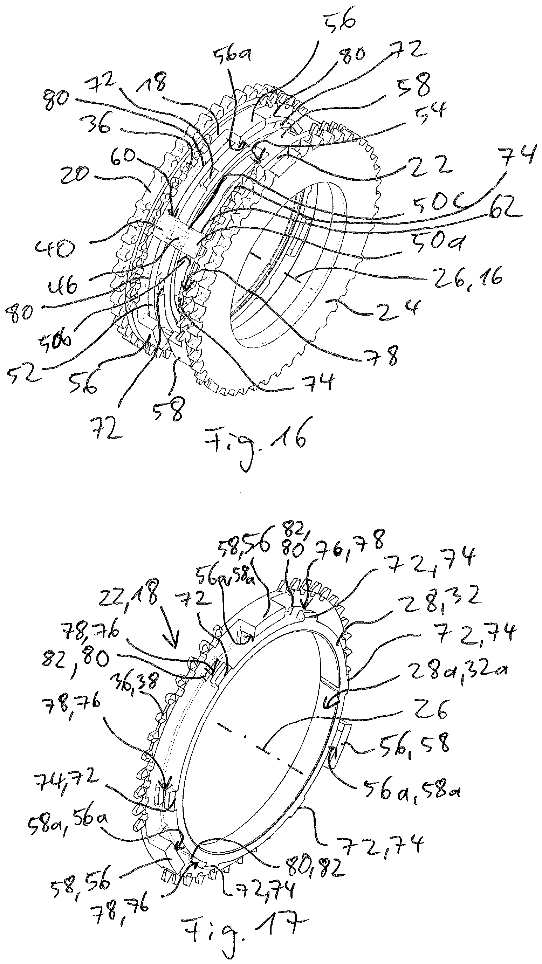

Die Figuren 14 bis 17 zeigen eine fünfte Ausführungsform der Synchronisierungseinheit 10. Wieder wird lediglich auf die Unterschiede zu den zuvor beschriebenen Ausführungsformen eingegangen

Nun stehen die Kopplungselemente 56, 58 im Wesentlichen in Axialrichtung vom zugeordneten Synchronring 18, 22 ab.

Dabei gehen die Kopplungselemente 56, 58 vom jeweils zugeordneten Sperrverzahnungsabschnitt 36, 38 aus.

Die Ringfedern 52, 54 sind nun jeweils radial innerhalb der zugeordneten Kopplungselemente 56, 58 angeordnet und liegen jeweils an einer Haltefläche 56a, 58a des zugeordneten Kopplungselements 56, 58 an, die radial nach innen gerichtet ist.

Dabei können die Ringfedern 52, 54 nach radial außen vorgespannt sein.

Somit sind die Ringfedern 52, 54 in Axialrichtung reibschlüssig mit den zugeordneten Halteflächen 56a, 58a gekoppelt und am zugeordneten Synchronring 18, 22 gehalten.

Darüber hinaus sind in der fünften Ausführungsform an den radial äußeren Seiten der Reibkonusabschnitte 28, 32 Sicherungsvorsprünge 72, 74 vorgesehen, die gegenüber dem jeweiligen Reibkonusabschnitt 28, 32 radial nach außen hervorstehen.

Die Sicherungsvorsprünge 72, 74 sind dabei jeweils an einem dem zugeordneten Sperrverzahnungsabschnitt 36, 38 entgegengesetzten Axialende des zugehörigen Synchronrings 18, 22 angeordnet, sodass zwischen den Sicherungsvorsprüngen 72, 74 und dem zugeordneten Sperrverzahnungsabschnitt 36, 38 ein umfangsmäßig umlaufendes Nutsegment 76, 78 entsteht.

Die Ringfedern 53, 54 verlaufen umfangsmäßig durch diese Nutsegmente 76, 78 hindurch und sind auf diese Weise über die Sicherungsvorsprünge 72, 74 in Axialrichtung zusätzlich formschlüssig am Synchronring 18, 22 gehalten.

Um eine direkte Anlage der Ringfedern 52, 54 am zugeordneten Sperrverzahnungsabschnitt 36, 38 zu verhindern und so insbesondere ausreichend Raum für die Kopplung der Ringfedern 52, 54 mit den Druckstücken 40 zu schaffen, können an den Sperrverzahnungsabschnitten 36, 38 Abstandshalter 80, 82 vorgesehen sein, sodass die Nutsegmente 76, 78 zwischen den Abstandshaltern 80, 82 und den Sicherungsvorsprüngen 72, 74 gebildet sind.

In der vierten Ausführungsform sind insgesamt doppelt so viele Sicherungsvorsprünge 72, 74 vorgesehen wie Kopplungselemente 56, 58.

Dabei sind am Umfang der Synchronringe 18, 22 jeweils zwei Sicherungsvorsprünge 72, 74 zwischen benachbarten Kopplungselementen 56, 58 positioniert.

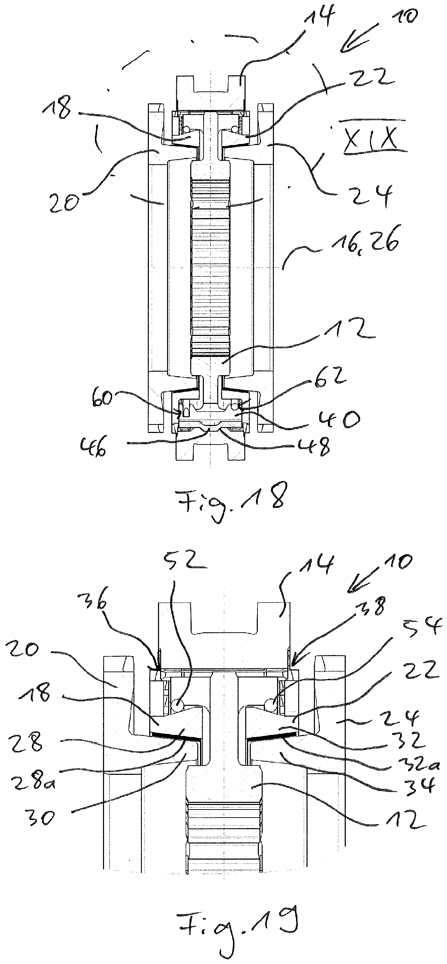

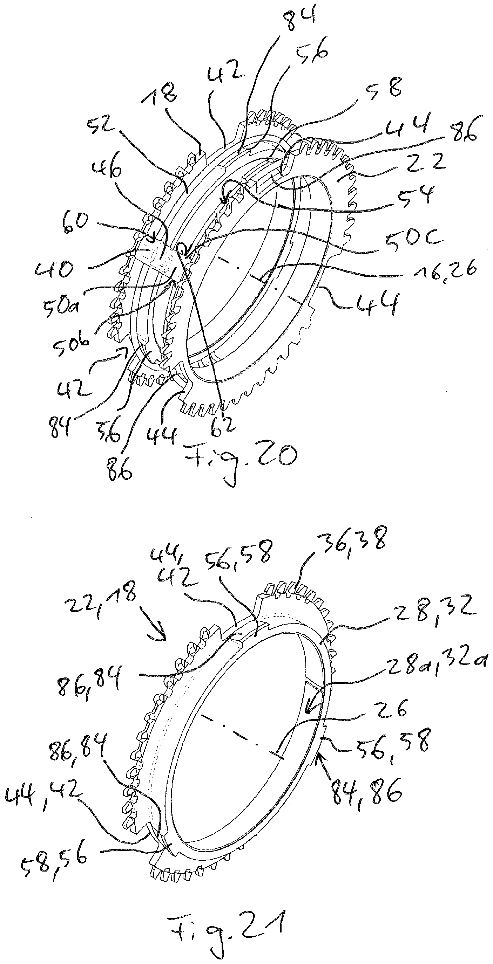

Eine sechste Ausführungsform der Synchronisierungseinheit 10 ist in den Figuren 18 bis 21 gezeigt. Wieder wird lediglich auf die Unterschiede zu den zuvor beschriebenen Ausführungsformen eingegangen.

Die Kopplungselemente 56, 58 stehen wieder in Radialrichtung vom jeweils zugeordneten Synchronring 18, 22 ab und sind an axial gegenüber den zugeordneten Sperrverzahnungsabschnitten 36, 38 entgegengesetzten Enden positioniert (vgl. vierte Ausführungsform).

Nunmehr sind die Kopplungselemente 56, 58 jedoch jeweils mit einer Schräge 84, 86 versehen, die in Richtung des zugeordneten Sperrverzahnungsabschnitts 36, 38 radial abfällt. Abschnitte der Schrägen 84, 86, die dem jeweils zugeordneten Sperrverzahnungsabschnitt 36, 38 benachbart angeordnet sind, liegen also radial weiter innen als Abschnitte der Schrägen 84, 86, die an dem zugeordneten Sperrverzahnungsabschnitt 36, 38 abgewandten Enden derselben liegen.

Die Ringfedern 52, 54 liegen auf den Schrägen 84, 86 der zugeordneten Kopplungselemente 56, 58 auf und sind somit mittels der Kopplungselemente 56, 58 in Axialrichtung formschlüssig am jeweils zugeordneten Synchronring 18, 22 gehalten.

Bei einer Betätigung der Synchronisierungseinheit 10 gemäß der sechsten Ausführungsform wird die entlang der Betätigungsrichtung hinten liegende Ringfeder 52, 54 durch Abgleiten entlang der zugeordneten Schrägen 84, 86 radial geweitet. Dies führt zu einer Rückstellkraft in Richtung der Neutralstellung der Synchronisierungseinheit 10.

Die Synchronringe 18, 22 weisen in der sechsten Ausführungsform zudem Aussparungen 42, 44 in den Sperrverzahnungsabschnitten 36, 38 auf. Im Unterschied zur ersten Ausführungsform sind diese jedoch in Axialrichtung nicht den Druckstücken 40 benachbart angeordnet, sondern den Kopplungselementen 56, 58, insbesondere den Schrägen 84, 86.

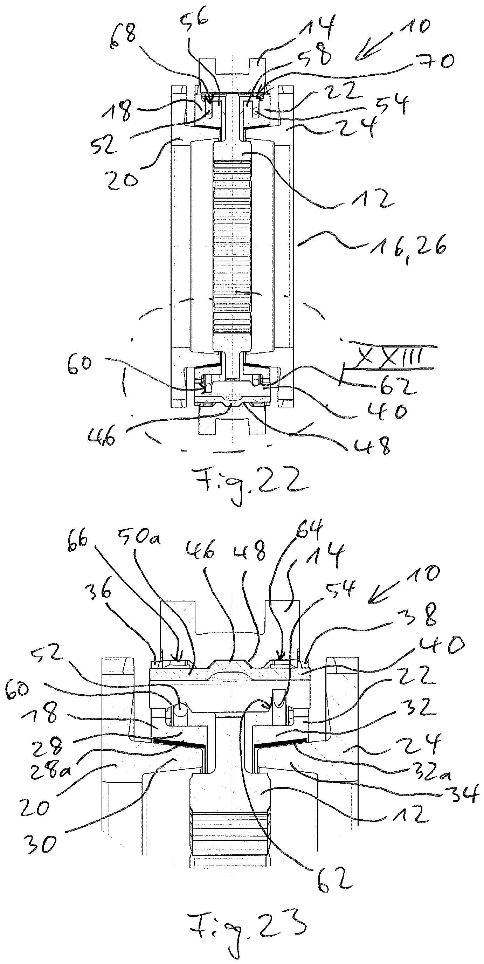

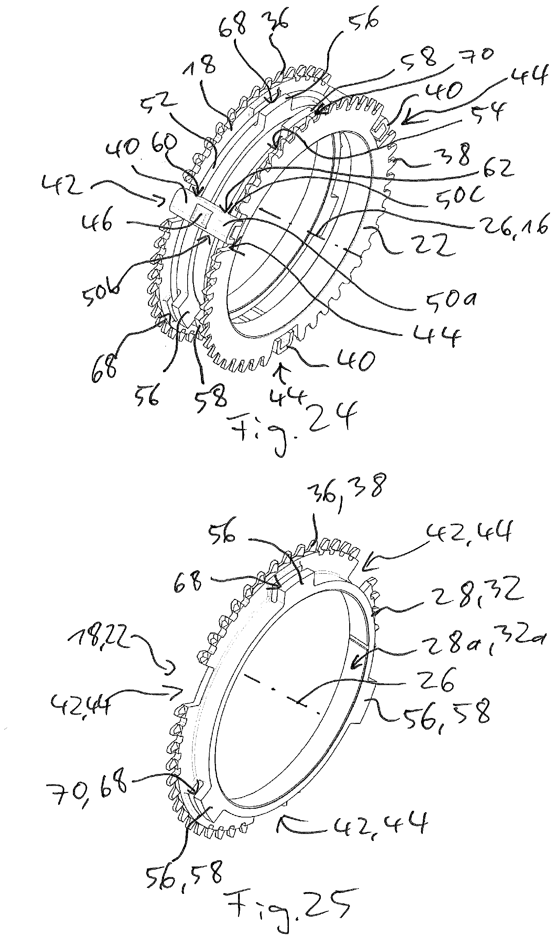

Die Figuren 22 bis 26 zeigen eine siebte Ausführungsform der Synchronisierungseinheit 10. Wieder wird lediglich auf die Unterschiede zu den zuvor beschriebenen Ausführungsformen eingegangen

Dabei sind die Kopplungselemente 56, 58 wie in der vierten Ausführungsform ausgeführt. Auf die zugehörigen Erläuterungen wird verwiesen.

Im Unterschied zur vierten Ausführungsform sind nun jedoch die Synchronringe 18, 22 mit Aussparungen 42, 44 versehen, in die die Druckstücke 40 in einer Neutralstellung der Synchronisierungseinheit 10 eingreifen (siehe auch erste Ausführungsform).

Im Vergleich zu den vorstehenden Ausführungsformen sind nun jedoch die erste Umfangsnut 60 und die zweiten Umfangsnut 62 der Druckstücke 40 anders gestaltet.

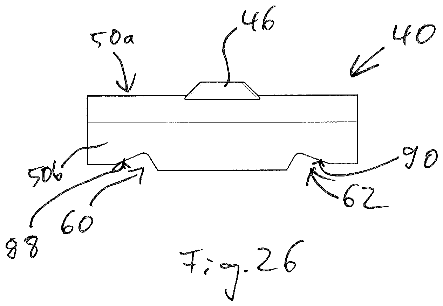

Die zugehörigen Nutkonturen, d.h. die Form der Umfangsnuten 60, 62 bei einer Betrachtung in Umfangsrichtung, umfassen nun jeweils eine Schrägfläche 88, 90 (siehe Figur 26).

Nachdem auch in der siebten Ausführungsform die Druckstücke 40 als Biegestanzteile aus Blech hergestellt sind und einen im Wesentlichen U-förmigen Querschnitt aufweisen, versteht es sich, dass die Schrägflächen 88, 90 jeweils aus zwei Flächenabschnitten zusammengesetzt sind, die an den Stirnseiten der jeweiligen Seitenschenkel 50b, 50c der Druckstücke 40 angeordnet sind. Auf die Ausführungen zum Aufbau des Druckstücks 40 in den Erläuterungen zur ersten und zweiten Ausführungsform wird verwiesen.

Beim Betätigen der Synchronisierungseinheit 10, d. h. beim axialen Verschieben der Druckstücke 40, kann somit die entlang der Betätigungsrichtung hinten liegende Ringfeder 52, 54 durch Abgleiten an der zugeordneten Schrägfläche 88, 90 radial komprimiert werden. Daraus ergibt sich eine Rückstellkraft, die in Richtung der Neutralstellung der Synchronisierungseinheit 10 wirkt. Es versteh sich, dass diese Rückstellkraft die aus dem Verbiegen der hinteren Ringfeder 52, 54 in Axialrichtung resultierende Rückstellkraft ergänzt. Letztere wurde bereits mit Bezug auf die vierte Ausführungsform erläutert.

Die vorstehenden sieben Ausführungsformen wurden jeweils getrennt voneinander erläutert. Es versteht sich jedoch, dass einzelne konstruktive Elemente oder Merkmale, die nur mit Bezug auf eine der Ausführungsformen erläutert wurden, ohne Weiteres auch in den übrigen Ausführungsformen verwendet werden können.

## Patentansprüche

1. Synchronisierungseinheit (10) für ein Schaltgetriebe, mit
einem ersten Synchronring (18),
einem zweiten Synchronring (22),
zumindest einem Druckstück (40) und
zwei Ringfedern (52, 54),
wobei der erste Synchronring (18) und der zweite Synchronring (22) koaxial und um eine Synchronringachse (26) drehbar angeordnet sind,
und der erste Synchronring (18) und der zweite Synchronring (22) jeweils einen Reibkonusabschnitt (28, 32) mit einer radial innenseitigen Reibfläche (28a, 32a) und jeweils einen Sperrverzahnungsabschnitt (36, 38) aufweisen und der erste Synchronring (18) und der zweite Synchronring (22) derart relativ zueinander angeordnet sind, dass die Sperrverzahnungsabschnitte (36, 38) an entgegengesetzten axialen Enden der Synchronringe (18, 22) angeordnet sind,
wobei eine der Ringfedern (52, 54) an einer radialen Außenseite des Reibkonusabschnitts (28) des ersten Synchronrings (18) und die andere der Ringfedern (52, 54) an einer radialen Außenseite des Reibkonusabschnitts (32) des zweiten Synchronrings (22) angeordnet ist, und
die beiden Ringfedern (52, 54) in Axialrichtung mittels des zumindest einen Druckstücks (40) gekoppelt sind,
**dadurch gekennzeichnet, dass** das Druckstück (40) in Einbaulage in Axialrichtung betrachtet einen U-förmigen Querschnitt mit einer nach radial innen weisenden offenen Seite hat.

2. Synchronisierungseinheit (10) nach Anspruch 1, **dadurch gekennzeichnet, dass** an jedem Synchronring (18, 22) zumindest ein Kopplungselement (56, 58) zur Drehkopplung des jeweiligen Synchronrings (18, 22) mit einer Nabe (12) vorgesehen ist, wobei mittels des Kopplungselements (56, 58) die am zugeordneten Synchronring (18, 22) positionierte Ringfeder (52, 54) gehalten ist.

3. Synchronisierungseinheit (10) nach Anspruch 2, **dadurch gekennzeichnet, dass** mehrere Druckstücke (40), insbesondere drei Druckstücke (40), und mehrere Kopplungselemente (56, 58) vorgesehen sind, wobei die Druckstücke (40) und die Kopplungselemente (56, 58) umfangsmäßig alternierend angeordnet sind.

4. Synchronisierungseinheit (10) nach Anspruch 2 oder 3, **dadurch gekennzeichnet, dass** die Kopplungselemente (56, 58) in Umfangsrichtung betrachtet L-förmig verlaufen, mit einem vom Reibkonusabschnitt (28, 32) radial nach außen verlaufenden Steg (56a, 58a) und einem daran anschließenden, sich axial und radial nach innen erstreckenden Schenkel (56b, 58b).

5. Synchronisierungseinheit (10) nach Anspruch 4, **dadurch gekennzeichnet, dass** ein Neigungswinkel (α₁, β₁) des Schenkels (56b, 58b) der Kopplungselemente (56, 58) gegenüber der Synchronringachse (26)
größer ist als ein Neigungswinkel (α₂, β₂) des Reibkonusabschnitts (28, 32) gegenüber der Synchronringachse (26),
kleiner ist als ein Neigungswinkel (α₂, β₂) des Reibkonusabschnitts (28, 32) gegenüber der Synchronringachse (26) oder
im Wesentlichen gleich groß ist wie ein Neigungswinkel (α₂, β₂) des Reibkonusabschnitts (28, 32) gegenüber der Synchronringachse (26).

6. Synchronisierungseinheit (10) nach Anspruch 4 oder 5, **dadurch gekennzeichnet, dass** die Ringfedern (52, 54) radial innenseitig an ihrem zumindest einen zugeordneten Kopplungselement (56, 58) anliegen, insbesondere in Neutralstellung am Übergang zwischen Schenkel (56b, 58b) und Steg (56a, 58a) anliegen.

7. Synchronisierungseinheit nach Anspruch 2 oder 3, **dadurch gekennzeichnet, dass** das zumindest eine Kopplungselement (56, 58) im Wesentlichen radial oder axial vom zugeordneten Synchronring (18, 22) absteht.

8. Synchronisierungseinheit (10) nach einem der vorhergehenden Ansprüche, **dadurch gekennzeichnet, dass** die Ringfedern (52, 54) radial nach außen vorgespannt sind.

9. Synchronisierungseinheit (10) nach einem der vorhergehenden Ansprüche, **dadurch gekennzeichnet, dass** das Druckstück (40) in Einbaulage an seiner radialen Innenseite zumindest zwei axial voneinander beabstandete Umfangsnuten (60, 62) aufweist und in jeder der Umfangsnuten (60, 62) eine der Ringfedern (52, 54) aufgenommen ist.

10. Synchronisierungseinheit (10) nach Anspruch 9, **dadurch gekennzeichnet, dass** die Umfangsnuten (60, 62) an radial nach Innen weisenden Stirnflächen der Seitenschenkel (50b, 50c) des U vorgesehen sind.

11. Synchronisierungseinheit (10) nach einem der vorhergehenden Ansprüche, **dadurch gekennzeichnet, dass** das Druckstück (40) in Einbaulage an seiner radialen Außenseite einen Zentriervorsprung (46) aufweist, der in Neutralstellung der Synchronisierungseinheit (10) in eine zugeordnete, an einer Schiebemuffe (14) vorgesehene Zentriervertiefung (48) eingreifen kann und/oder in zumindest einer Schaltstellung der Synchronisierungseinheit (10) in eine zugeordnete, an der Schiebemuffe (14) vorgesehene Haltegeometrie (64, 66) eingreifen kann.

12. Synchronisierungseinheit (10) nach Anspruch 11, **dadurch gekennzeichnet, dass** der Zentriervorsprung (46) in Einbaulage des Druckstücks (40) betrachtet ein nach außen umgeformter Abschnitt des Mittelstegs (50a) des U ist.

13. Synchronisierungseinheit (10) nach einem der vorhergehenden Ansprüche, **dadurch gekennzeichnet, dass** das Druckstück (40) ein Stanzbiegeteil aus Blech, ein Schmiedeteil, ein generativ gefertigtes Bauteil oder ein Kunststoffbauteil ist.

14. Synchronisierungseinheit (10) nach einem der vorhergehenden Ansprüche, **dadurch gekennzeichnet, dass**
sich das Druckstück (40) in einer Neutralstellung der Synchronisierungseinheit (10) in jeweils eine Aussparung (42, 44) im Sperrverzahnungsabschnitt (36, 38) des ersten Synchronrings (18) und des zweiten Synchronrings (22) erstreckt oder
axiale Stirnseiten des Druckstücks (40) in einer Neutralstellung der Synchronisierungseinheit (10) dem Sperrverzahnungsabschnitt (36, 38) des jeweils benachbarten Synchronrings (18, 22) gegenüberliegen, insbesondere am Sperrverzahnungsabschnitt (36, 38) des jeweils benachbarten Synchronrings (18, 22) anliegen.

## Claims

1. A synchronizing unit (10) for a manual transmission, comprising
a first synchronizer ring (18),
a second synchronizer ring (22),
at least one thrust piece (40), and
two annular springs (52, 54),
the first synchronizer ring (18) and the second synchronizer ring (22) being arranged coaxially and so as to be rotatable about a synchronizer ring axis (26),
and the first synchronizer ring (18) and the second synchronizer ring (22) each having a friction cone portion (28, 32) with a radially inside friction surface (28a, 32a) and each having a locking toothing portion (36, 38), and the first synchronizer ring (18) and the second synchronizer ring (22) being arranged relative to each other such that the locking toothing portions (36, 38) are arranged at opposite axial ends of the synchronizer rings (18, 22),
one of the annular springs (52, 54) being arranged on a radially outer surface of the friction cone portion (28) of the first synchronizer ring (18) and the other of the annular springs (52, 54) being arranged on a radially outer surface of the friction cone portion (32) of the second synchronizer ring (22), and
the two annular springs (52, 54) being coupled in the axial direction by means of the at least one thrust piece (40),
**characterized in that** in the installation position and as viewed in the axial direction, the thrust piece (40) has a U-shaped cross section with an open side facing radially inwards.

2. The synchronizing unit (10) according to claim 1, **characterized in that** each synchronizer ring (18, 22) has at least one coupling element (56, 58) provided thereon for rotational coupling of the respective synchronizer ring (18, 22) to a hub (12), the annular spring (52, 54) positioned on the associated synchronizer ring (18, 22) being held by means of the coupling element (56, 58).

3. The synchronizing unit (10) according to claim 2, **characterized in that** a plurality of thrust pieces (40), in particular three thrust pieces (40), and a plurality of coupling elements (56, 58) are provided, the thrust pieces (40) and the coupling elements (56, 58) being arranged so as to alternate circumferentially.

4. The synchronizing unit (10) according to claim 2 or 3, **characterized in that** the coupling elements (56, 58) extend in an L-shape as viewed in the circumferential direction, with a web (56a, 58a) extending radially outwards from the friction cone portion (28, 32) and an adjoining leg (56b, 58b) extending axially and radially inwards.

5. The synchronizing unit (10) according to claim 4, **characterized in that** an inclination angle (α₁, β₁) of the leg (56b, 58b) of the coupling elements (56, 58) in relation to the synchronizer ring axis (26) is
larger than an inclination angle (α₂, β₂) of the friction cone portion (28, 32) in relation to the synchronizer ring axis (26),
smaller than an inclination angle (α₂, β₂) of the friction cone portion (28, 32) in relation to the synchronizer ring axis (26), or
substantially equal to an inclination angle (α₂, β₂) of the friction cone portion (28, 32) in relation to the synchronizer ring axis (26).

6. The synchronizing unit (10) according to claim 4 or 5, **characterized in that** the annular springs (52, 54) rest radially on the inside against their at least one associated coupling element (56, 58), in particular rest against the transition between the leg (56b, 58b) and the web (56a, 58a) in the neutral position.

7. The synchronizing unit according to claim 2 or 3, **characterized in that** the at least one coupling element (56, 58) projects substantially radially or axially from the associated synchronizer ring (18, 22).

8. The synchronizing unit (10) according to any of the preceding claims, **characterized in that** the annular springs (52, 54) are preloaded radially outwards.

9. The synchronizing unit (10) according to any of the preceding claims, **characterized in that** in the installation position, the thrust piece (40) includes on its radially inner surface at least two circumferential grooves (60, 62) axially spaced apart from each other, and each of the circumferential grooves (60, 62) has one of the annular springs (52, 54) received therein.

10. The synchronizing unit (10) according to claim 9, **characterized in that** the circumferential grooves (60, 62) are provided on radially inwardly facing end faces of the side legs (50b, 50c) of the U.

11. The synchronizing unit (10) according to any of the preceding claims, **characterized in that** in the installation position, the thrust piece (40) includes on its radially outer surface a centering projection (46) which, in the neutral position of the synchronizing unit (10), can engage in an associated centering depression (48) provided on a sliding sleeve (14) and/or, in at least one shifting position of the synchronizing unit (10), can engage in an associated holding geometry (64, 66) provided on the sliding sleeve (14).

12. The synchronizing unit (10) according to claim 11, **characterized in that** as viewed in the installation position of the thrust piece (40), the centering projection (46) is a portion, reshaped outwards, of the center web (50a) of the U.

13. The synchronizing unit (10) according to any of the preceding claims, **characterized in that** the thrust piece (40) is a stamped bent part made of sheet metal, a forged part, a component made by generative manufacturing, or a plastic component.

14. The synchronizing unit (10) according to any of the preceding claims, **characterized in that**
in a neutral position of the synchronizing unit (10), the thrust piece (40) extends into a respective recess (42, 44) in the locking toothing portions (36, 38) of the first synchronizer ring (18) and of the second synchronizer ring (22), or
in a neutral position of the synchronizing unit (10), axial face sides of the thrust piece (40) are located opposite the locking toothing portion (36, 38) of the respectively neighboring synchronizer ring (18, 22), in particular rest against the locking toothing portion (36, 38) of the respectively neighboring synchronizer ring (18, 22).

## Revendications

1. Unité de synchronisation (10) pour une boîte de vitesses, comprenant
un premier anneau de synchronisation (18),
un deuxième anneau de synchronisation (22),
au moins une pièce de pression (40) et
deux ressorts annulaires (52, 54),
le premier anneau de synchronisation (18) et le deuxième anneau de synchronisation (22) étant agencés de manière coaxiale et rotatifs autour d'un axe d'anneau de synchronisation (26),
et le premier anneau de synchronisation (18) et le deuxième anneau de synchronisation (22) présentant chacun un tronçon de cône de friction (28, 32) présentant une surface de friction (28a, 32a) située radialement du côté intérieur et chacun un tronçon de denture de blocage (36, 38), et le premier anneau de synchronisation (18) et le deuxième anneau de synchronisation (22) étant agencés l'un par rapport à l'autre de telle sorte que les tronçons de denture de blocage (36, 38) sont agencés à des extrémités axiales opposées des anneaux de synchronisation (18, 22),
l'un des ressorts annulaires (52, 54) étant agencé sur un côté extérieur radial du tronçon de cône de friction (28) du premier anneau de synchronisation (18) et l'autre des ressorts annulaires (52, 54) étant agencé sur un côté extérieur radial du tronçon de cône de friction (32) du deuxième anneau de synchronisation (22), et
les deux ressorts annulaires (52, 54) étant couplés dans le sens axial au moyen de ladite au moins une pièce de pression (40),
**caractérisé en ce que** dans la position de montage, la pièce de pression (40), vue dans le sens axial, présente une section transversale en forme de U avec un côté ouvert orienté radialement vers l'intérieur.

2. Unité de synchronisation (10) selon la revendication 1, **caractérisée en ce qu'**il est prévu sur chaque anneau de synchronisation (18, 22) au moins un élément de couplage (56, 58) pour le couplage en rotation de l'anneau de synchronisation (18, 22) respectif avec un moyeu (12), le ressort annulaire (52, 54) positionné sur l'anneau de synchronisation (18, 22) associé étant maintenu au moyen de l'élément de couplage (56, 58).

3. Unité de synchronisation (10) selon la revendication 2, **caractérisée en ce qu'**il est prévu plusieurs pièces de pression (40), en particulier trois pièces de pression (40), et plusieurs éléments de couplage (56, 58), les pièces de pression (40) et les éléments de couplage (56, 58) étant agencés en alternance sur la circonférence.

4. Unité de synchronisation (10) selon la revendication 2 ou 3, **caractérisée en ce que** les éléments de couplage (56, 58) s'étendent en forme de L, vu dans le sens circonférentiel, avec une barrette (56a, 58a) s'étendant radialement vers l'extérieur à partir du tronçon de cône de friction (28, 32) et une branche (56b, 58b) adjacente s'étendant axialement et radialement vers l'intérieur.

5. Unité de synchronisation (10) selon la revendication 4, **caractérisée en ce qu'**un angle d'inclinaison (α₁, β₁) de la branche (56b, 58b) des éléments de couplage (56, 58) par rapport à l'axe d'anneau de synchronisation (26)
est supérieur à un angle d'inclinaison (α₂, β₂) du tronçon de cône de friction (28, 32) par rapport à l'axe d'anneau de synchronisation (26),
est inférieur à un angle d'inclinaison (α₂, β₂) du tronçon de cône de friction (28, 32) par rapport à l'axe d'anneau de synchronisation (26) ou
est sensiblement égal à un angle d'inclinaison (α₂, β₂) du tronçon de cône de friction (28, 32) par rapport à l'axe d'anneau de synchronisation (26).

6. Unité de synchronisation (10) selon la revendication 4 ou 5, **caractérisée en ce que** radialement du côté intérieur, les ressorts annulaires (52, 54) sont en appui sur leur au moins un élément de couplage (56, 58) associé, en particulier en appui à la jonction entre la branche (56b, 58b) et la barrette (56a, 58a) dans la position neutre.

7. Unité de synchronisation selon la revendication 2 ou 3, **caractérisée en ce que** ledit au moins un élément de couplage (56, 58) fait saillie sensiblement radialement ou axialement de la bague de synchronisation (18, 22) associée.

8. Unité de synchronisation (10) selon l'une des revendications précédentes, **caractérisée en ce que** les ressorts annulaires (52, 54) sont précontraints radialement vers l'extérieur.

9. Unité de synchronisation (10) selon l'une des revendications précédentes, **caractérisée en ce que** la pièce de pression (40) présente, dans la position de montage, sur son côté intérieur radial, au moins deux rainures circonférentielles (60, 62) espacées axialement l'une de l'autre, et **en ce qu'**un des ressorts annulaires (52, 54) est reçu dans chacune des rainures circonférentielles (60, 62).

10. Unité de synchronisation (10) selon la revendication 9, **caractérisée en ce que** les rainures circonférentielles (60, 62) sont prévues sur des faces frontales, orientées radialement vers l'intérieur, des branches latérales (50b, 50c) du U.

11. Unité de synchronisation (10) selon l'une des revendications précédentes, **caractérisée en ce que** la pièce de pression (40) présente, dans la position de montage, sur son côté extérieur radial, une saillie de centrage (46) qui, dans la position neutre de l'unité de synchronisation (10), est apte à s'engager dans un évidement de centrage (48) associé prévu sur un manchon coulissant (14) et/ou, dans au moins une position de commutation de l'unité de synchronisation (10), est apte à s'engager dans une géométrie de retenue (64, 66) associée prévue sur le manchon coulissant (14).

12. Unité de synchronisation (10) selon la revendication 11, **caractérisée en ce que** la saillie de centrage (46), vue dans la position de montage de la pièce de pression (40), est un tronçon déformé vers l'extérieur de la barrette centrale (50a) du U.

13. Unité de synchronisation (10) selon l'une des revendications précédentes, **caractérisée en ce que** la pièce de pression (40) est une pièce découpée et pliée en tôle, une pièce forgée, une pièce fabriquée de manière générative ou une pièce en matière plastique.

14. Unité de synchronisation (10) selon l'une des revendications précédentes, **caractérisée en ce que**
dans une position neutre de l'unité de synchronisation (10), la pièce de pression (40) s'étend dans un évidement respectif (42, 44) dans le tronçon de denture de blocage (36, 38) du premier anneau de synchronisation (18) et du deuxième anneau de synchronisation (22), ou
dans une position neutre de l'unité de synchronisation (10), des faces frontales axiales de la pièce de pression (40) sont opposées au tronçon de denture de blocage (36, 38) de l'anneau de synchronisation (18, 22) respectivement adjacent, et sont en particulier en appui contre le tronçon de denture de blocage (36, 38) de l'anneau de synchronisation (18, 22) respectivement voisin.
